# EUROPEAN PATENT SPECIFICATION

(11) **EP 4 040 582 B1**
(45) Date of publication and mention of the grant of the patent: **24.12.2025**
(21) Application number: 21872686.7
(22) Date of filing: 22.07.2021
(51) Int. Cl.: H01M 50/20, H01M 50/116, H01M 50/124, H01M 10/48, H01M 50/231, H01M 50/229, H01M 50/211, H01M 50/105

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 28.09.2020 KR 20200126067
(43) Date of publication of application: 10.08.2022
(73) Proprietor: LG Energy Solution, Ltd., Seoul 07335 (KR)
(72) Inventor: YUN, Hyeonki, Daejeon 34122 (KR); MOON, Jeong Oh, Daejeon 34122 (KR)
(74) Representative: Plasseraud IP
(86) International application number: PCT/KR2021/009487
(87) International publication number: WO 2022/065653

(56) References cited:
- EP-A1- 1 160 892
- CN-A- 109 585 703
- CN-U- 204 558 556
- CN-U- 204 558 556
- CN-U- 207 781 661
- KR-A- 20120 058 676
- KR-A- 20160 054 265
- KR-A- 20180 104 927
- KR-A- 20200 017 046
- US-A1- 2019 280 265

## Description

### [TECHNICAL FIELD]

### Cross Citation with Related Application(s)

This application claims the benefit of Korean Patent Application No. 10-2020-0126067 filed on September 28, 2020 with the Korean Intellectual Property Office.

The present disclosure relates to a battery module and a battery pack comprising the same, and more particularly to a battery module that controls cell swelling, and a battery pack comprising the same.

### [BACKGROUND]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common.

Such a battery module includes a battery cell stack in which a plurality of battery cells are stacked, a module frame for housing the battery cell stack, and a compression pad formed between the module frame and the outermost battery cells of the battery cell stack or between a plurality of battery cells.

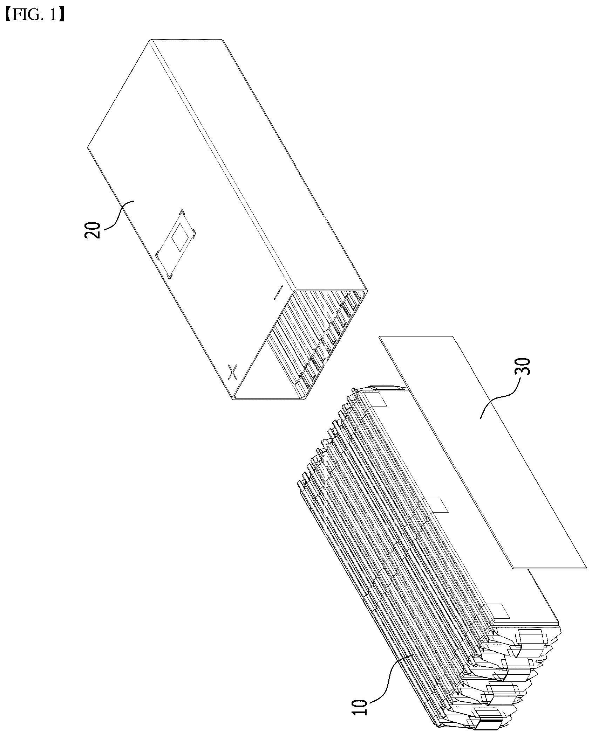

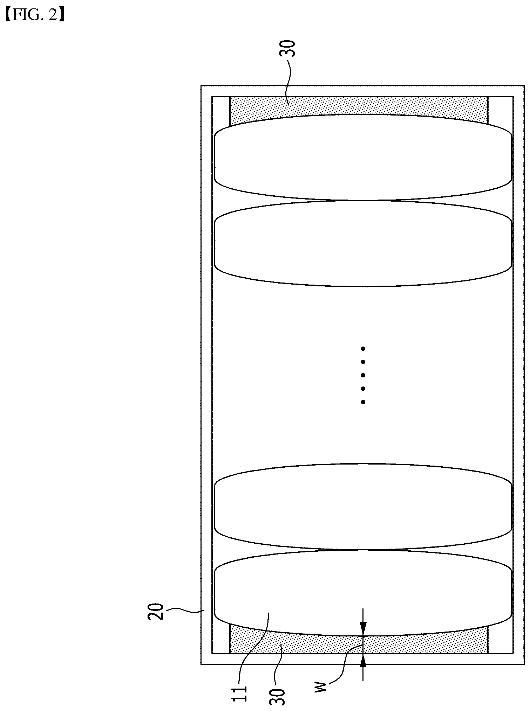

Fig. 1 is a diagram showing a battery module in which a compression pad is formed according to the related art. Fig. 2 is a cross-sectional view taken along the stacking direction of the battery cell stack of Fig. 1.

Referring to Figs. 1 and 2, a compression pad 30 is formed between the outermost battery cell of the battery cell stack 10 and the module frame 20. Although not shown, the compression pad 30 may be further formed in a part between the battery cells 11 of the battery cell stack 10.

The compression pad 30 can be formed so as to cover most of the side surface of the module frame 20 corresponding to the battery cell 11. At this time, when a swelling phenomenon of the battery cells 11 occurs, the battery cells 11 may swell up as shown in Fig. 2. Conventionally, even if the compression pad 30 is pressed and compressed, a minimum compression thickness w that no longer performs compression of the compression pad 30 is present, and thus, there was a problem that it was difficult to flexibly cope with the swelling phenomenon of the battery cells 11.

US 2019/280265 A1, KR 2012 0058676 A, EP 1 160 892 A1, CN 207 781 661 U and CN 204 558 556 U disclose a battery module having a pouch case.

### [DETAILED DESCRIPTION OF THE INVENTION]

### [Technical Problem]

It is an object of the present disclosure to provide a battery module that controls cell swelling, and a battery pack comprising the same.

However, the problem to be solved by embodiments of the present disclosure is not limited to the above-described problems, and can be variously expanded within the scope of the technical idea included in the present disclosure.

### [Technical Solution]

According to the present disclosure, there is provided a battery module as defined in the appended set of claims, the battery module comprises a battery cell stack in which a plurality of battery cells are stacked, and a module frame for housing the battery cell stack, wherein the battery cell comprises a pouch case and an electrode assembly housed in the pouch case, and wherein a foam pad layer for controlling cell swelling is located at the outermost part of the pouch case.

The pouch case may be configured such that an inner resin layer and a metal layer are sequentially formed between the electrode assembly and the outermost layer formed of the foam pad layer in a direction toward the outermost layer from the electrode assembly.

The battery module may further include an outer resin layer located between the metal layer and the outermost layer.

The battery module may further include a packaging sheet layer located between the outer resin layer and the outermost layer.

The packaging sheet layer may be formed of a nylon or polyethylene terephthalate (PET) material.

The inner resin layer, the metal layer, and the outer resin layer may be a polypropylene (PP) layer, an aluminum layer, and a nylon layer, respectively.

The foam pad layer may be formed of a polyethylene terephthalate (PET) material or a polyurethane material.

Among the battery cells included in the battery cell stack, a battery cell located at the outermost part of the battery cell stack may be in contact with a side surface part of the module frame, and the battery cell part in contact with the side surface part of the module frame may be the outermost layer formed of the foam pad layer.

A foam pad layer may be formed at the outermost part of each pouch case of the battery cells included in the battery cell stack.

According to another embodiment of the present disclosure, there is provided a battery pack comprising the above-mentioned battery module.

### [ADVANTAGEOUS EFFECTS]

According to the embodiments of the present disclosure, the foam pad layer is formed at the outermost part of the pouch case, and thus, the pouch battery cell can control by itself a swelling.

In addition, since a swelling absorption structure is formed for each battery cell, the pressure distribution and deformation amount can be uniform when viewed as a whole of the battery cell stack.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing a battery module in which a compression pad is formed according to the related art;
Fig. 2 is a cross-sectional view taken along the stacking direction of the battery cell stack of Fig. 1;
Fig. 3 is an exploded perspective view showing a pouch-type battery cell according to an embodiment of the present disclosure;
Fig. 4 is a perspective view showing a state in which the pouch-type battery cell of FIG. 3 is assembled;
Fig. 5 is a cross-sectional view taken along the cutting line A-A' of Fig 4;
Fig. 6 is an enlarged cross-sectional view of the region P of Fig. 5; and
Fig. 7 is a cross-sectional view showing a battery module including the pouch-type battery cell of Fig. 4.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

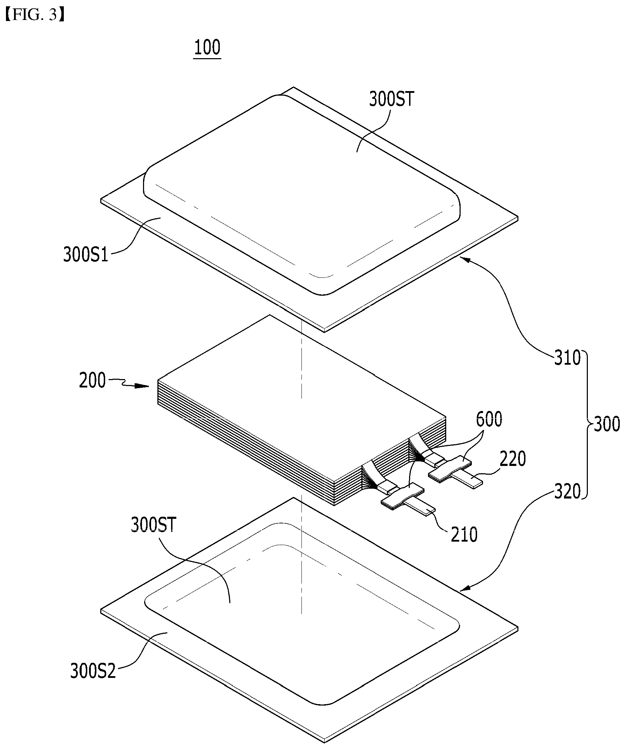

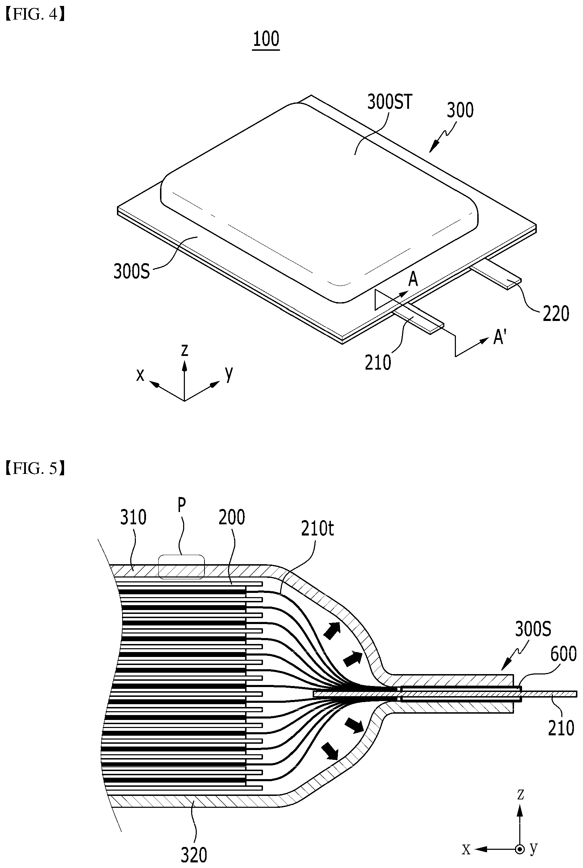

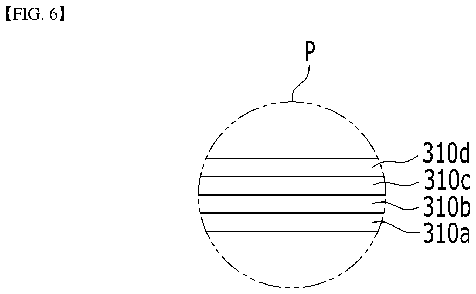

Fig. 3 is an exploded perspective view showing a pouch-type battery cell according to an embodiment of the present disclosure. Fig. 4 is a perspective view showing a state in which the pouch-type battery cell of FIG. 3 is assembled. Fig. 5 is a cross-sectional view taken along the cutting line A-A' of Fig 4. Fig. 6 is an enlarged cross-sectional view of the region P of Fig. 5.

Referring to Figs. 3 to 6, the pouch-type battery cell 100 according to the present embodiment may be manufactured by housing an electrode assembly 200 inside the pouch case 300 and then sealing it. The electrode assembly 200 may include a positive electrode, a negative electrode, and a separator disposed between the positive electrode and the negative electrode. The electrode assembly 200 may be a stack type electrode assembly, a jelly-roll type electrode assembly, or a stack/folding-type electrode assembly.

Each of the positive electrode and the negative electrode includes an electrode tab 210t, and the electrode leads 210 and 220 respectively connected to the electrode tab 210t may be exposed to the outside of the pouch case 300. In addition, the electrode leads 210 and 220 can be located respectively in the sealing part 300S in a state of being covered with a lead film 600 so as to secure a sealing property and an insulation property.

The pouch case 300 is composed of a laminate sheet, and may include a resin layer for heat fusion and a metal layer for preventing material penetration.

Specifically, referring to Fig. 6, the upper case 310 may include an inner resin layer 310a for sealing, a metal layer 310b for preventing material penetration, an outer resin layer 310c, and a foam pad layer 310d for controlling cell swelling. The foam pad layer 310d according to the present embodiment is located on the outermost layer of the pouch case 300. The foam pad layer 310d may be formed of a polyethylene terephthalate (PET) material or a polyurethane material. In this case, the foam pad layer 310d is a pad made of a foam having a certain degree of compression ratio in order to control swelling. In other words, the foam pad layer 310d may have flexible features such that it can absorb swelling without being too stiff.

If necessary, a packaging sheet layer (not shown) may be further included between the foam pad layer 310d and the outer resin layer 310c.

The layer structure concerning the upper case 310 described above may be equally applied to a lower case 320. In other words, the lower case 320 may include an inner resin layer, a metal layer, an outer resin layer, and a foam pad layer for controlling cell swelling along a direction away from the electrode assembly 200.

The outer resin layer 310c and a packaging sheet layer may have excellent tensile strength and weather resistance compared to their thickness and have electrical insulation property in order to protect the pouch-type secondary battery 100 from the outside. Each of the outer resin layer 310c and the packaging sheet layer may include a polyethylene terephthalate (PET) resin or a nylon resin. The metal layer 310b may prevent air, moisture and the like from flowing into the pouch-type battery layer 100. The metal layer 310b may include aluminum (Al). The inner resin layer 310a may be heat-fused to each other by heat and pressure applied in a state where the electrode assembly 200 is built-in. The inner resin layer 310a may include unstretched polypropylene (CPP) or polypropylene (PP).

Referring back to Figs. 3 to 5, a recessed housing part 300ST in which the electrode assembly 200 can be seated may be formed in each of the upper case 310 and the lower case 320. Sealing parts 300S1 and 300S2 may be provided along the outer periphery of the housing part 300ST for each of the upper case 310 and the lower case 320. The sealing part 300S1 of the upper case 310 and the sealing part 300S2 of the lower case 320 can be heat-fused to each other to form the sealing part 300S and seal the pouch case 300.

In another embodiment of the present disclosure, one side of the upper case and one side of the lower case can be integrally connected to each other, and the remaining three sides can be heat-fused.

On the other hand, each of the plurality of positive electrodes and the plurality of negative electrodes included in the electrode assembly 200 may include a positive electrode tab and a negative electrode tab, to which electrode leads 210 and 220 are connected. Specifically, one of the electrode leads 210 and 220 may be a positive electrode lead, and the other may be a negative electrode lead. As described above, the electrode leads 210 and 220 connected to the electrode assembly 200 protrude from one end part of the pouch case 300 and are exposed to the outside of the pouch case 300.

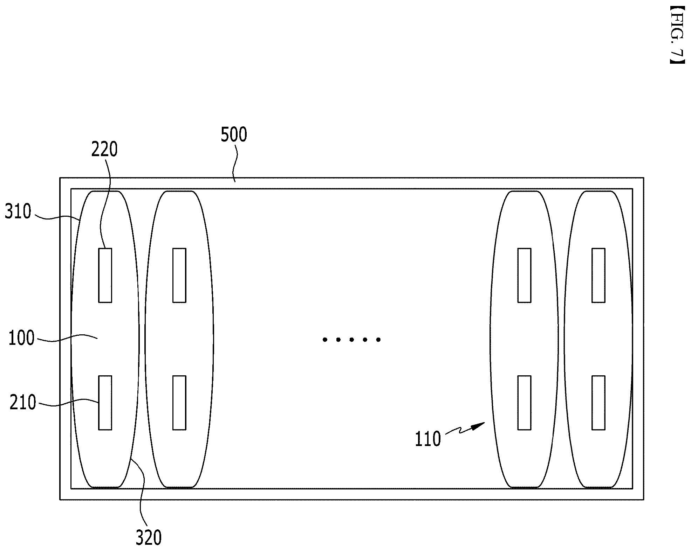

Fig. 7 is a cross-sectional view showing a battery module including the pouch-type battery cell of Fig. 4.

Referring to Fig. 7, the battery module according to the present embodiment includes a battery cell stack 110 formed by stacking a plurality of battery cells 100 in one direction, and a module frame 500 for housing the battery cell stack 110. A stacking direction of the battery cells 100 may be perpendicular to a protruding direction of the electrode leads 210 and 220. According to the present embodiment, among the battery cells 100 included in the battery cell stack 110, the battery cell 100 located at the outermost part of the battery cell stack 110 can be in contact with the side surface part of the module frame 500.

The part of the battery cell 100 in contact with the side surface part of the module frame 500 may be the upper case 310 or the lower case 320 described with reference to Fig. 5 and 6. In this case, the layer closest to the side surface part of the module frame 500 is preferably a foam pad layer 310d of the upper case 310. The foam pad layer 310d is formed on the outermost layer, whereby the pouch-type battery cell can control in itself a swelling, and accordingly, it becomes unnecessary to apply the separate compression pad described with reference to Fig. 2 in the battery module.

A foam pad layer 310d may be formed at the outermost part of the pouch case 300 of each of the battery cells 100 included in the battery cell stack 110. In this case, a foam pad layer may be formed on the outermost layer of each of the upper case 310 and the lower case 320. Conventionally, since it was structured such that a compression pad is applied between the module frame and the outermost battery cells and/or between the battery cells, the compression pad was applied to each of several battery cells, the pressure distribution and deformation amount were different for each battery cell. However, according to the present embodiment, when a swelling absorption structure is formed for each battery cell, the battery cell stack 110 may be uniform in pressure distribution and deformation amount when viewed as a whole.

On the other hand, one or more of the battery modules according to the present embodiments can be packaged in a pack case to form a battery pack.

The above-mentioned battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module, which also falls under the scope of the present disclosure.

Although the invention has been shown and described above with reference to the preferred embodiments, the scope of the present disclosure is not limited thereto, and numerous other modifications and embodiments can be devised by those skilled in the art, which will fall within the scope of the principles of the invention described in the appended claims.

### [Description of Reference Numerals]

100: battery cell
110: battery cell stack
200: electrode assembly
300: pouch case
310d: foam pad layer

## Claims

1. A battery module comprising:
a battery cell stack (110) in which a plurality of battery cells are stacked, and
a module frame for housing the battery cell stack (110),
wherein the battery cell comprises a pouch case and an electrode assembly (200) housed in the pouch case (300),
**characterized in that** a foam pad layer (310d) for controlling cell swelling forms the outermost layer of the pouch case (300), and
the foam pad layer (310d) is a pad made of a foam having a certain degree of compression ratio in order to control swelling.

2. The battery module of claim 1, wherein:
the pouch case (300) is configured such that an inner resin layer (310a) and a metal layer (310b) are sequentially formed between the electrode assembly (200) and an outermost layer formed of the foam pad layer (310d) in a direction toward the outermost layer from the electrode assembly (200).

3. The battery module of claim 2,
which further comprises an outer resin layer (310c) located between the metal layer (310b) and the outermost layer.

4. The battery module of claim 3,
which further comprises a packaging sheet layer located between the outer resin layer (310c) and the outermost layer.

5. The battery module of claim 4, wherein:
the packaging sheet layer is formed of a nylon or polyethylene terephthalate (PET) material.

6. The battery module of claim 3, wherein:
the inner resin layer (310a), the metal layer (310b), and the outer resin layer (310c) are a polypropylene (PP) layer, an aluminum layer, and a nylon layer, respectively.

7. The battery module of claim 1, wherein:
the foam pad layer (310d) is formed of a polyethylene terephthalate (PET) material or a polyurethane material.

8. The battery module of claim 1, wherein:
among the battery cells included in the battery cell stack (110), a battery cell located at the outermost part of the battery cell stack (110) is in contact with a side surface part of the module frame, and
the battery cell part in contact with the side surface part of the module frame is the outermost layer formed of the foam pad layer (310d).

9. The battery module of claim 8, wherein:
a foam pad layer (310d) is formed at the outermost part of each pouch case (300) of the battery cells included in the battery cell stack (110).

10. A battery pack comprising the battery module according to claim 1.

## Patentansprüche

1. Batteriemodul, umfassend:
einen Batteriezellenstapel (110), in welchem eine Mehrzahl von Batteriezellen gestapelt ist, und
einen Modulrahmen zum Aufnehmen des Batteriezellenstapels (110),
wobei die Batteriezelle ein Beutelgehäuse und eine Elektrodenanordnung (200) umfasst, welche in dem Beutelgehäuse (300) aufgenommen ist,
**dadurch gekennzeichnet, dass** eine Schaumbelagschicht (310d) zum Steuern eines Zellenanschwellens die äußerste Schicht des Beutelgehäuses (300) bildet, und
die Schaumbelagschicht (310d) ein Belag ist, welcher aus einem Schaum hergestellt ist, welcher einen spezifischen Grad eines Verdichtungsverhältnisses aufweist, um ein Anschwellen zu steuern.

2. Batteriemodul nach Anspruch 1, wobei:
das Beutelgehäuse (300) derart eingerichtet ist, dass eine innere Harzschicht (310a) und eine Metallschicht (310b) sequenziell zwischen der Elektrodenanordnung (200) und einer äußersten Schicht, welche aus der Schaumbelagschicht (310d) gebildet ist, in einer Richtung in Richtung der äußersten Schicht von der Elektrodenanordnung (200) gebildet ist.

3. Batteriemodul nach Anspruch 2,
welches ferner eine äußere Harzschicht (310c) umfasst, welche zwischen der Metallschicht (310b) und der äußersten Schicht angeordnet ist.

4. Batteriemodul nach Anspruch 3,
welches ferner eine Verpackungsbahn-Schicht umfasst, welche zwischen der äußeren Harzschicht (310c) und der äußersten Schicht angeordnet ist.

5. Batteriemodul nach Anspruch 4, wobei:
die Verpackungsbahn-Schicht aus einem Nylon- oder Polyethylenterephthalat-(PET)-Material gebildet ist.

6. Batteriemodul nach Anspruch 3, wobei:
die innere Harzschicht (310a), die Metallschicht (310b) und die äußere Harzschicht (310c) eine Polypropylen-(PP)-Schicht, eine Aluminium-Schicht bzw. eine Nylon-Schicht sind.

7. Batteriemodul nach Anspruch 1, wobei:
die Schaumbelagschicht (310d) aus einem Polyethylenterephthalat-(PET)-Material oder einem Polyurethan-Material gebildet ist.

8. Batteriemodul nach Anspruch 1, wobei:
unter den Batteriezellen, welche in dem Batteriezellenstapel (110) umfasst sind, eine Batteriezelle, welche an dem äußersten Teil des Batteriezellenstapels (110) angeordnet ist, in Kontakt mit einem Seitenflächenteil des Modulrahmens ist, und
der Batteriezellenteil, welcher in Kontakt mit dem Seitenflächenteil des Modulrahmens ist, die äußerste Schicht ist, welche aus der Schaumbelagschicht (310d) gebildet ist.

9. Batteriemodul nach Anspruch 8, wobei:
eine Schaumbelagschicht (310d) an dem äußersten Teil jedes Beutelgehäuses (300) der Batteriezellen gebildet ist, welche in dem Batteriezellenstapel (110) umfasst sind.

10. Batteriepack, umfassend das Batteriemodul nach Anspruch 1.

## Revendications

1. Module de batterie comprenant :
un empilement de cellules de batterie (110) dans lequel une pluralité de cellules de batterie sont empilées, et
un cadre de module pour loger l'empilement de cellules de batterie (110),
dans lequel la cellule de batterie comprend un boîtier de type poche et un ensemble électrode (200) logé dans le boîtier de type poche (300),
**caractérisé en ce qu'**une couche de tampon de mousse (310d) destinée à réguler le gonflement de cellule forme la couche la plus externe du boîtier de type poche (300), et
la couche de tampon de mousse (310d) est un tampon constitué d'une mousse présentant un certain degré de rapport de compression afin de réguler le gonflement.

2. Module de batterie selon la revendication 1, dans lequel :
le boîtier de type poche (300) est configuré de sorte qu'une couche de résine interne (310a) et une couche métallique (310b) soient formées séquentiellement entre l'ensemble électrode (200) et une couche la plus externe formée de la couche de tampon de mousse (310d) dans une direction allant de l'ensemble électrode (200) vers la couche la plus externe.

3. Module de batterie selon la revendication 2,
qui comprend en outre une couche de résine externe (310c) située entre la couche métallique (310b) et la couche la plus externe.

4. Module de batterie selon la revendication 3,
qui comprend en outre une couche de feuille d'emballage située entre la couche de résine externe (310c) et la couche la plus externe.

5. Module de batterie selon la revendication 4, dans lequel :
la couche de feuille d'emballage est formée d'un matériau en nylon ou en polyéthylène téréphtalate (PET).

6. Module de batterie selon la revendication 3, dans lequel :
la couche de résine interne (310a), la couche métallique (310b) et la couche de résine externe (310c) sont respectivement une couche de polypropylène (PP), une couche d'aluminium et une couche de nylon.

7. Module de batterie selon la revendication 1, dans lequel :
la couche de tampon de mousse (310d) est formée d'un matériau en polyéthylène téréphtalate (PET) ou d'un matériau en polyuréthane.

8. Module de batterie selon la revendication 1, dans lequel :
parmi les cellules de batterie incluses dans l'empilement de cellules de batterie (110), une cellule de batterie située au niveau de la partie la plus externe de l'empilement de cellules de batterie (110) est en contact avec une partie de surface latérale du cadre de module, et
la partie de cellule de batterie en contact avec la partie de surface latérale du cadre de module est la couche la plus externe formée de la couche de tampon de mousse (310d).

9. Module de batterie selon la revendication 8, dans lequel :
une couche de tampon de mousse (310d) est formée au niveau de la partie la plus externe de chaque boîtier de type poche (300) des cellules de batterie incluses dans l'empilement de cellules de batterie (110).

10. Bloc-batterie comprenant le module de batterie selon la revendication 1.
